# EUROPÄISCHE PATENTSCHRIFT

(11) **EP 1 342 563 B1**
(45) Veröffentlichungstag und Bekanntmachung des Hinweises auf die Patenterteilung: **02.06.2004**
(21) Anmeldenummer: 03001508.5
(22) Anmeldetag: 23.01.2003
(51) Int. Cl.: B32B 5/26, B32B 5/04, B32B 7/04, D04H 13/00

(54) **Verfahren zur Herstellung einer elastischen Verbundfolie mit textiler Oberfläche**
Method of preparation of an elastic laminate film with a textile surface
Procédé de fabrication d'une feuille composite élastique à surface textile

(30) Priorität: 02.03.2002 DE 10209302
(43) Veröffentlichungstag der Anmeldung: 10.09.2003
(73) Patentinhaber: Nordenia Deutschland Gronau GmbH, 48599 Gronau (DE)
(72) Erfinder: Hamulski, Markus, 48599 Gronau-Epe (DE)
(74) Vertreter: Albrecht, Rainer Harald, Dr.-Ing.

(56) Entgegenhaltungen:
- EP-A- 0 703 068
- WO-A-94/14607
- DE-A- 4 238 541
- GB-A- 1 389 201
- US-A- 5 344 691

## Beschreibung

Die Erfindung betrifft ein Verfahren zur Herstellung einer Verbundfolie mit textiler Oberfläche, die beispielsweise zur Herstellung von Windelhöschen oder als Schließbänder verwendet werden kann.

Bei einem in EP 0 674 581 B1 beschriebenen Verfahren wird eine Materialbahn aus einem Faservlies auf eine elastische Folienbahn aus einem thermoplastischen Elastomer aufgebracht und an beabstandeten Kontaktstellen verklebt oder verschweißt. Das Laminat wird anschließend bis in die Nähe der Bruchdehnungsgrenze der Fasern des Vlieses gedehnt und wieder entspannt. Durch die Verstreckung, die auch als Aktivierung bezeichnet wird, wird das Dehnungsvermögen der Verbundfolie verbessert.

Aus EP 0 521 883 B1 ist ein Verfahren zur Herstellung einer Verbundfolie bekannt, die an vorgegebenen Stellen elastische und nichtelastische Bereiche aufweist. Zunächst wird vorzugsweise durch Coextrusion ein Laminat hergestellt, das eine elastische Schicht aus einem thermoplastischen Elastomer und mindestens eine Deckschicht aus einem thermoplastischen Kunststoff geringer Elastizität, z.B. einem Polyolefin, aufweist. Durch eine anschließende, auf vorgegebene Bereiche beschränkte Aktivierung durch Verstreckung entsteht eine Verbundfolie, die dehnungsfähige und weniger dehnungsfähige Abschnitte aufweist.

DE4238541 offenbart ein Verfahren zur Herstellung einer elastischen Materialbahn die aus einer flexiblen, elastischen Trägerfolie und aus je einer auf der Ober- und Unterseite der Trägerfolie wellenförmig befestigten Vliesbahn besteht, wobei letztere mit gitterartig angeordneten Punktschweißungen verschweißt sind.

Bei den bekannten Verfahren wird nicht nur das Faservlies, sondern auch die elastische Schicht bei der mechanischen Aktivierung einer großen Beanspruchung ausgesetzt. Folglich müssen elastische Folien verwendet werden, die ausreichend dick sind, um den mechanischen Beanspruchungen standzuhalten. Bei der Verwendung perforierter und dadurch luftdurchlässiger Folien besteht die Gefahr einer Rissbildung zwischen den Perforationen.

Der Erfindung liegt die Aufgabe zugrunde, ein Verfahren zur Herstellung einer elastischen Verbundfolie anzugeben, bei dem große mechanische Beanspruchungen von der elastischen Schicht ferngehalten werden, so dass auch Verbundfolien mit einer sehr dünnen elastischen Schicht, die ggf. auch perforiert sein kann, herstellbar sind.

Gegenstand der Erfindung und Lösung dieser Aufgabe ist ein Verfahren zur Herstellung einer elastischen Verbundfolie mit textiler Oberfläche,
wobei mindestens eine von einer Rolle abgezogene Materialbahn aus einem Faservlies quer zur Laufrichtung irreversibel gedehnt wird,
wobei der durch Querdehnung erzeugten Zuwachs der Materialbahnbreite durch eine in Laufrichtung der Materialbahn wirksame Zugspannung in Fältchen umgeformt wird und
wobei das unter Zugspannung stehende und durch Querdehnung modifizierte Faservlies auf eine in Querrichtung elastische Folienbahn aus einem thermoplastischen Elastomer aufgebracht und an quer zur Laufrichtung der Bahnen beabstandeten Kontaktstellen verklebt oder verschweißt wird.

Durch eine irreversible Dehnung des Faservlieses wird das Material unter teilweiser Zerstörung des Fasergebildes aufgelockert. Dabei steht die aus dem Faservlies bestehende Materialbahn während der Verstreckung und Weiterverarbeitung zur Verbundfolie in Laufrichtung unter einer Zugspannung, die so groß ist, dass der durch die irreversible Querdehnung erzeugte Zuwachs der Materialbahnbreite nicht sichtbar wird, sondern sich in Form von kleinen Fältchen bzw. Dünnstellen in der Materialbahn bemerkbar macht. Durch die irreversible Querdehnung entsteht im Faservlies eine Struktur, die sich fast ohne Kraftaufwand in die vorgedehnte Richtung verformt. Die durch eine gleitseitig aufgeprägte Zugspannung in Laufrichtung erzeugte Fältchenbildung erlaubt die Entfaltung der Elastizität in die vorgedehnte Richtung.

Bei einer Verklebung der die Verbundfolie bildenden Bahnen wird der Klebstoff zweckmäßig in parallelen, schmalen Streifen auf eine der zu verbindenden Flächen aufgetragen. Es kann mit einem üblichen Hot-Melt-Klebstoff gearbeitet werden. Neben der Klebetechnik besteht auch die Möglichkeit, die elastische Folienbahn und das durch Querdehnung vorbehandelte Faservlies punktförmig durch Ultraschall zu verschweißen.

Es soll im Rahmen der erfindungsgemäßen Lehre nicht ausgeschlossen sein, das vorverstreckte Faservlies auf eine elastisch gedehnte Folie aufzubringen und vor der Entspannung dieser Folie fest mit dieser zu verbinden. Vorzugsweise wird die elastische Folie jedoch im entspannten Zustand mit dem vorverstreckten Faservlies verbunden. Diese Verfahrensführung ist insbesondere von Vorteil, wenn die Folienbahn vor dem Aufbringen des Faservlieses perforiert wird. Perforieren meint, dass die elastische Folienbahn z.B. durch Verwendung einer Heiss-Nadelwalze mit Luftöffnungen versehen wird, deren Durchmesser im Bereich zwischen 0,5 und 2 mm liegt. Dadurch, dass die Folienbahn nicht gedehnt wird, wird die an sich bestehende Gefahr einer Rissbildung zwischen den perforierten Punkten erheblich verringert. Es können sehr dünne elastische Folienbahnen verarbeitet werden.

Nach dem erfindungsgemäßen Verfahren kann auch eine Verbundfolie mit textilen Oberflächen hergestellt werden, die elastische und nichtelastische Bereiche aufweist. Ein Bereich geringer Elastizität lässt sich auf überraschend einfache Weise dadurch herstellen, dass das durch Querdehnung modifizierte und in Laufrichtung unter Zugspannung stehende Faservlies mit der elastischen Folienbahn in dem betreffenden Abschnitt vollflächig gebunden wird. Die elastische Folienbahn und das Faservlies können in dem vollflächig zu verbindenden Abschnitt auf die Schmelztemperatur des thermoplastischen Elastomers erhitzt und verpresst werden. Alternativ besteht die Möglichkeit, die elastische Folienbahn und das Faservlies in dem Abschnitt, der einen nichtelastischen Bereich der Verbundfolie bildet, mit einem vollflächigen Klebstoffauftrag zu verkleben. Wenn in Bezug auf die Aufteilung oder Breite der elastischen und nichtelastischen Bereiche Änderungen gewünscht werden, lässt sich dies durch eine Änderung des Formats der Verklebung erreichen, ohne dass Werkzeuge für eine mechanische Aktivierung geändert werden müssen. Die aus dem Faservlies bestehende Materialbahn kann stets unabhängig von der Festlegung der nichtelastischen Bereiche der Verbundfolie in Querrichtung durchgängig gedehnt werden. Das erleichtert erheblich die Verfahrensführung und Umstellarbeiten, wenn die Aufteilung der elastischen und nichtelastischen Bereiche geändert werden soll.

### Ausführungsbeispiele:

In einem ersten Ausführungsbeispiel wurde ein Faservliesstoff aus Polypropylenfasern in einem Reckwerk in Querrichtung gedehnt und anschließend in Laufrichtung unter Zugspannung stehend auf eine 75 µm dicke Materialbahn eines thermoplastischen Elastomers auf Basis von Styrolethylenblockcopolymer (SEBS) aufgebracht und mit dieser verklebt. Die Verklebung erfolgte unter Verwendung eines Hot-Melt-Klebstoffes basierend auf Styrolisoprenstyrolblockcopolymer (SIS), der in parallelen, schmalen Streifen auf einen der zu verbindenden Flächen aufgetragen wurde. Die nach dem beschriebenen Verfahren hergestellte Verbundfolie besitzt eine hohe Zugfestigkeit in Bandlaufrichtung und ist in Querrichtung elastisch.

In einem zweiten Ausführungsbeispiel wurde nach dem zuvor beschriebenen Verfahren auf eine 75 µm dicke Folienbahn aus SEBS beidseitig ein in Querrichtung irreversibel gedehntes Faservlies aufgebracht. Die Verbundfolie besitzt durch das Vorhandensein von Faservliesstoffen auf beiden Seiten einen angenehmen textilen Charakter sowie die zuvor beschriebenen Dehnungseigenschaften.

In einem dritten Ausführungsbeispiel wurde die elastische Folienbahn vor dem Aufbringen des vorverstreckten Faservlieses unter Verwendung einer Heiss-Nadelwalze perforiert. Die perforierten Löcher waren in Linien unter einem Winkel von 45° angeordnet und besaßen einen Durchmesser von ca. 0,8 mm. Der Abstand zwischen den Löchern betrug 3,7 mm. Das in Querrichtung irreversibel gedehnte Faservlies wurde in Laufrichtung unter Zugspannung stehend beidseitig in der beschriebenen Weise auf die Folienbahn aufgebracht. Die nach dem Verfahren hergestellte Verbundfolie weist in Querrichtung eine hohe Elastizität auf, besitzt einen angenehmen textilen Charakter und zeichnet sich zusätzlich durch eine hohe Luftdurchlässigkeit aus.

In einem vierten Ausführungsbeispiel wurde eine nach dem erfindungsgemäßen Verfahren gemäß Beispiel 1 hergestellte Folie in 75 mm breite Streifen geschnitten und weiterverarbeitet. Bei der Weiterverarbeitung wurde die Verbundfolie in Randbereichen von jeweils 15 mm zwischen zwei Walzen bei einer Temperatur von 135 °C verpresst und verfestigt. Auf diese Weise wurde eine Verbundfolie erzeugt, die an den jeweils 15 mm breiten Rändern kompakt und unelastisch ist und in einem 35 mm breiten Mittelbereich eine sehr gute Elastizität aufweist und sich in diesem Mittelbereich um 100% dehnen lässt.

## Patentansprüche

1. Verfahren zur Herstellung einer elastischen Verbundfolie mit textiler Oberfläche, wobei mindestens eine von einer Rolle abgezogene Materialbahn aus einem Faservlies quer zur Laufrichtung irreversibel gedehnt wird, wobei der durch Querdehnung erzeugte Zuwachs der Materialbahnbreite durch eine in Laufrichtung der Materialbahn wirksame Zugspannung in Fältchen umgeformt wird und wobei das unter Zugspannung stehende und durch Querdehnung modifizierte Faservlies auf eine in Querrichtung elastische Folienbahn aus einem thermoplastischen Elastomer aufgebracht und an quer zur Laufrichtung der Bahnen beabstandeten Kontaktstellen verklebt oder verschweißt wird.

2. Verfahren nach Anspruch 1, **dadurch gekennzeichnet, dass** Klebstoff in parallelen Streifen auf eine der zu verbindenden Flächen aufgetragen wird.

3. Verfahren nach Anspruch 1, **dadurch gekennzeichnet, dass** die elastische Folienbahn und das Faservlies punktförmig durch Ultraschall verschweißt werden.

4. Verfahren nach einem der Ansprüche 1 bis 3, **dadurch gekennzeichnet, dass** die elastische Folie im entspannten Zustand mit dem durch Querdehnung modifizierten Faservlies verbunden wird.

5. Verfahren nach einem der Ansprüche 1 bis 4, **dadurch gekennzeichnet, dass** die elastische Folienbahn vor dem Aufbringen des Faservlieses perforiert wird.

6. Verfahren nach einem der Ansprüche 1 bis 5 zur Herstellung einer elastischen Verbundfolie mit nichtelastischen Bereichen, **dadurch gekennzeichnet, dass** das durch Querdehnung modifizierte und in Längsrichtung unter Zugspannung stehende Faservlies mit der elastischen Folienbahn in mindestens einem Abschnitt, der einen nichtelastischen Bereich der Verbundfolie bildet, vollflächig verbunden wird.

7. Verfahren nach Anspruch 6, **dadurch gekennzeichnet, dass** die elastische Folienbahn und das Faservlies in dem vollflächig zu verbindenden Abschnitt auf die Schmelztemperatur des thermoplastischen Elastomers erhitzt und verpresst werden.

8. Verfahren nach Anspruch 6, **dadurch gekennzeichnet, dass** die elastische Folienbahn und das Faservlies in dem Abschnitt, der einen nichtelastischen Bereich der Verbundfolie bildet, mit einem vollflächigen Klebstoffauftrag verklebt werden.

## Claims

1. A method of producing an elastic composite film having a textile surface, wherein at least one length of material which is made of a fibrous web and which is taken from a roll is irreversibly stretched transversely to its direction of travel, wherein the increase in width of the length of the material caused by transverse stretching is converted into small folds by a tensile stress which acts in the direction of travel of the length of material, and wherein the fibrous web which is under a tensile stress and which is modified by tensile stretching is applied to a length of film which is made of a thermoplastic elastomer and which is elastic in a transverse direction, and is adhesively bonded or welded at contact points which are spaced apart transversely to the direction of travel of the lengths.

2. A method according to claim 1, **characterised in that** adhesive is applied in parallel strips to one of the faces to be bonded.

3. A method according to claim 1, **characterised in that** the elastic length of film and the fibrous web are spot-welded ultrasonically.

4. A method according to any one of claims 1 to 3; **characterised in that** the elastic film is bonded in an unstressed state to the fibrous web which is modified by transverse stretching.

5. A method according to any one of claims 1 to 4, **characterised in that** the elastic length of film is perforated before the fibrous web is applied.

6. A method according to any one of claims 1 to 5 of producing an elastic composite film comprising non-elastic regions, **characterised in that** the fibrous web, which is modified by transverse stretching and which is under a tensile stress in its longitudinal direction, is bonded all over to the elastic length of material in at least one section which forms a non-elastic region of the composite film.

7. A method according to claim 6, **characterised in that** in the section which is to be bonded all over the elastic length of film and the fibrous web are heated to the melting temperature of the thermoplastic elastomer and are pressed.

8. A method according to claim 6, **characterised in that** in the section which forms a non-elastic region of the composite film the elastic length of film and the fibrous web are adhesively bonded by an all over application of adhesive.

## Revendications

1. Procédé de fabrication d'une feuille composite élastique à surface textile, dans lequel une bande de matériau constituée d'un non-tissé, dévidée d'un rouleau, est étirée de manière irréversible perpendiculairement à la direction de défilement, l'augmentation de la largeur de la bande de matériau, produite par l'étirage transversal, étant transformée en petits plis par une contrainte de traction agissant dans la direction de défilement de la bande de matériau, et le non-tissé sous contrainte de traction et modifié par étirage transversal, étant appliqué sur une bande de feuille élastique dans la direction transversale, constituée d'un élastomère thermoplastique, et étant collé ou soudé en des points de contact espacés, perpendiculairement à la direction de défilement des bandes.

2. Procédé selon la revendication 1, **caractérisé en ce que** de la colle est appliquée en bandes parallèles sur l'une des surfaces à assembler.

3. Procédé selon la revendication 1, **caractérisé en ce que** la bandé de feuille élastique et le non-tissé sont soudés par points par ultrasons.

4. Procédé selon l'une des revendications 1 à 3, **caractérisé en ce que** la feuille élastique à l'état détendu. est assemblée au non-tissé modifié par étirage transversal.

5. Procédé selon l'une des revendications 1 à 4, **caractérisé en ce que** la bande de feuille élastique est perforée avant application du non-tissé.

6. Procédé selon l'une des revendications 1 à 5, pour la fabrication d'une feuille composite élastique comportant des zones non élastiques, **caractérisé en ce que** le non-tissé modifié par étirage transversal et sous contrainte de traction dans la direction longitudinale, est totalement assemblé à la bande de feuille élastique dans au moins une partie qui forme une zone non élastique de la feuille composite.

7. Procédé selon la revendication 6, **caractérisé en ce que** la bande de feuille élastique et le non-tissé dans la partie à assembler sur toute la surface, sont chauffés à la température de fusion de l'élastomère thermoplastique et pressés.

8. Procédé selon la revendication 6, **caractérisé en ce que** la bande de feuille élastique et le non-tissé sont collés par une application de colle sur toute la surface, dans la partie qui forme une zone non élastique de la feuille composite.
